# EUROPÄISCHE PATENTSCHRIFT

(11) **EP 2 633 346 B1**
(45) Veröffentlichungstag und Bekanntmachung des Hinweises auf die Patenterteilung: **15.07.2020**
(21) Anmeldenummer: 11778525.3
(22) Anmeldetag: 25.10.2011
(51) Int. Cl.: G02B 5/18, B42D 15/00, G02B 30/22

(54) **OPTISCH VARIABLES FLÄCHENMUSTER**
OPTICALLY VARIABLE SURFACE PATTERN
MOTIF DE SURFACE MODIFIABLE D'UN POINT DE VUE OPTIQUE

(30) Priorität: 27.10.2010 DE 102010049832
(43) Veröffentlichungstag der Anmeldung: 04.09.2013
(73) Patentinhaber: Giesecke+Devrient Currency Technology GmbH, 81677 München (DE)
(72) Erfinder: FUHSE, Christian, 83624 Otterfing (DE); GERHARDT, Thomas, 81549 München (DE)
(86) Internationale Anmeldenummer: PCT/EP2011/005377
(87) Internationale Veröffentlichungsnummer: WO 2012/055537

(56) Entgegenhaltungen:
- EP-B1- 1 676 157
- DE-A1- 10 308 327
- DE-A1-102005 061 749
- US-A- 6 043 936
- US-A1- 2007 110 317

## Beschreibung

Die vorliegende Erfindung betrifft ein optisch variables Flächenmuster, die Verwendung eines solchen Flächenmusters als Sicherheitselement, insbesondere für ein Sicherheitspapier, Wertdokument oder dergleichen, sowie ein Wertdokument mit einem solchen Sicherheitselement.

Zu schützende Gegenstände werden häufig mit einem Sicherheitselement ausgestattet, das die Überprüfung der Echtheit des Gegenstandes erlaubt und zugleich als Schutz vor unerlaubter Reproduktion dient.

Zu schützende Gegenstände sind beispielsweise Sicherheitspapiere, Ausweis- und Wertdokumente (wie zum Beispiel Banknoten, Chipkarten, Pässe, Identifikationskarten, Ausweiskarten, Aktien, Anlagen, Urkunden, Gutscheine, Schecks, Eintrittskarten, Kreditkarten, Gesundheitskarten, etc.) sowie Produktsicherungselemente (wie zum Beispiel Etiketten, Siegel, Verpackungen, etc.).

Um ein dreidimensionales Bild zu erzeugen, ist es bekannt, dreidimensionale Hologramme einzusetzen. Diese Hologramme können klassisch direkt belichtete Hologramme oder auch computergenerierte Stereogramme sein.

Nachteilig ist es hierbei, dass holographische Techniken mittlerweile auch außerhalb des Sicherheitsbereichs weit verbreitet sind, womit der Wert des Hologramms als Sicherheitsmerkmal schwindet. Des Weiteren rekonstruieren dreidimensionale Hologramme entweder nur in einer bestimmten Farbe bzw. Wellenlänge oder der dreidimensionale Effekt muss auf Kosten der vertikalen Parallaxe erkauft werden.

Aus der DE 10 2005 061749 A1 ist ein optisch variables Sicherheitselement mit einer Mikrostruktur in Form eines Mosaiks aus einer Vielzahl achromatisch reflektierender Mosaikelemente mit einer lateralen Abmessung unterhalb der Auflösungsgrenze des Auges bekannt, die durch die Parameter Größe, Umrissform, Reliefform, Reflexionsvermögen und räumliche Ausrichtung charakterisiert sind. Die Mosaikelemente bilden ein vorbestimmtes Motiv, indem verschiedene Gruppen von Mosaikelementen mit unterschiedlichen charakteristischen Parametern einfallendes Licht in unterschiedliche Raumbereiche reflektieren, so dass für einen Betrachter in einem vorgewählten Betrachtungsabstand beispielsweise ein Stereobild des Bildmotivs entsteht.

Die EP 1 696 157 B1 A beschreibt ein Verfahren zum Erzeugen eines ebenen oder gekrümmten Gitterbildes, das zumindest ein vorgegebenes Bild mit einzelnen Bildbereichen zeigt, bei dem eine Orientierung für das Gitterbild im Raum festgelegt wird, in welcher das vorgegebene Bild sichtbar sein soll und für jeden Bildbereich eine Farbe festgelegt wird, in der der jeweilige Bildbereich bei der festgelegten Orientierung erscheint.

Die US 6,043,936 A befasst sich mit einer diffraktiven Struktur mit einem im Wesentlichen ebenen Substrat, in oder auf dem ein Satz von Facetten ausgebildet ist. Jede Facette weist ein darauf ausgebildetes Beugungsgitter auf, so dass die diffraktive Struktur eine Farbe über einen weiten Bereich von Betrachtungs- und Beleuchtungswinkeln erzeugt.

In der DE 103 08 327 A1 ist eine Gitterstruktur zur Absicherung von Wertgegenständen beschrieben, bei deren Betrachtung ein Nullte-Ordnung- Gitterbild beobachtbar ist.

Ausgehend hiervon ist es daher Aufgabe der Erfindung, ein optisch variables Flächenmuster zur Verfügung zu stellen, mit dem ein Motiv in attraktiver Weise dreidimensional dargestellt werden kann.

Erfindungsgemäß wird die Aufgabe gelöst durch ein optisch variables Flächenmuster nach Anspruch 1.

Nachdem erfindungsgemäß für zumindest zwei Teilbereiche eine Halbtondarstellung bewirkt ist und somit nicht nur eine schwarz-weiß Darstellung, sondern eine Darstellung mit zumindest einem weiteren, dazwischenliegenden Helligkeitswert, wird ein äußerst attraktives dreidimensionales Erscheinungsbild bereitgestellt. Insbesondere können beispielsweise Portraits dreidimensional dargestellt werden.

Aufgrund der gerasterten Halbtondarstellung können zumindest drei Helligkeitsstufen dargeboten werden, was den Eindruck des dargestellten Motivs verbessert. Der Begriff der Helligkeitsstufen umfasst im Rahmen der Erfindung nicht nur Grau-Helligkeitsstufen, sondern auch Farb-Helligkeitsstufen für vorgegebene Grundfarben (beispielsweise durch einen farbigen lasierenden Überdruck). Insbesondere sind somit auch mehrfarbige Ansichten möglich.

Erfindungsgemäß können zumindest drei Helligkeitsstufen, insbesondere zumindest fünf Helligkeitsstufen bereitgestellt werden. Die Helligkeits- bzw. Graustufen können dabei beispielsweise als Prozentwert der maximalen Helligkeit angegeben werden, wobei 100% Helligkeit weiß entspricht, 0% Helligkeit schwarz entspricht und dazwischen liegende Helligkeitswerte grau entsprechen.

Das erfindungsgemäße Flächenmuster kann auf einem Träger ausgebildet sein. Der Träger kann ein- oder mehrschichtig ausgebildet sein. Insbesondere kann der Träger eine Folie und/ oder ein Papier aufweisen. Als Material kann beispielsweise ein Kunststoff bzw. Polymermaterial eingesetzt werden.

Mit dem erfindungsgemäßen Flächenmuster kann insbesondere eine achromatische Darstellung verwirklicht werden. Insbesondere kann ein achromatisches Stereogramm mittels der beiden Ansichten desselben Motivs bereitgestellt werden.

Das erfindungsgemäße Flächenmuster kann transparent, teiltransparent oder insbesondere auch reflektiv ausgebildet sein.

Die Pixelabschnitte weisen jeweils ein oder mehrere reflektive und/ oder refraktive Subpixel auf. Wenn das Flächenmuster reflektiv ausgebildet ist, weisen mehrere der Pixelabschnitte bevorzugt jeweils mehrere reflektive Subpixel auf. Die Subpixel können jeweils eine im Wesentlichen ebene oder nur leicht gekrümmte reflektive oder refraktive Facette aufweisen. Entsprechend liegen in den ersten und/ oder zweiten Pixelabschnitten jeweils eine oder mehrere reflektive und/ oder refraktive Facetten vor.

Solche reflektiven Facetten reflektieren einfallendes Licht im Wesentlichen nach den Gesetzen der Strahlenoptik. Alternativ können die Facetten auch in ein transparentes Medium geprägt werden, das einen von seiner Umgebung abweichenden Brechungsindex aufweist, so dass die Facetten nun als kleine Prismen statt als Spiegel wirken und einfallendes Licht in Transmission in eine zugehörige Betrachtungsrichtung brechen. Die hier für den Reflexionsfall beschriebenen Offenbarungen können vom Fachmann so ohne Schwierigkeiten auch auf den Transmissionsfall übertragen werden.

Die maximale Ausdehnung einer reflektiven oder refraktiven Facette liegt erfindungsgemäß zwischen etwa 2 µm und 300 µm. Bevorzugt kann diese zwischen 3 µm und 50 µm und besonders bevorzugt zwischen 4 µm und 20 µm liegen.

Ferner können die reflektiven oder refraktiven Subpixel mittels periodischer oder aperiodischer Sägezahngitter realisiert sein. Die Sägezahnbreiten können zwischen 2 µm und 100 µm, bevorzugt zwischen 3 µm und 50 µm und besonders bevorzugt zwischen 4 µm und 20 µm liegen.

Dunkle bzw. schwarze Pixelabschnitte (also Pixelabschnitte, die dunkle bzw. schwarze Bildpunkte darstellen sollen) können eines oder mehrere der nachfolgenden Merkmale aufweisen. So kann beispielsweise keine separate Struktur vorgesehen sein. Der entsprechende Pixelabschnitt kann als ebene Oberfläche ausgebildet sein, die parallel zur makroskopischen Oberfläche des erfindungsgemäßen Flächenmusters liegt. Der Pixelabschnitt kann eine diffraktive Struktur (insbesondere ein Beugungsgitter), eine Subwellenlängenstruktur (insbesondere Mottenaugenstrukturen) oder auch reflektive Strukturen, insbesondere Sägezahngitter bzw. Mikrospiegel, die in eine von der für die Ansicht vorgesehenen Richtung abweichende Richtung reflektieren, aufweisen. Bei dieser abweichenden Richtung kann es sich gegebenenfalls auch um eine zumindest teilweise zufällige Richtung handeln. Insbesondere handelt es sich um eine Richtung, die keiner Richtung einer der anderen Ansichten entspricht.

Ferner sind die reflektiven Subpixel eines Pixelabschnitts so ausgebildet, dass ein einfallender Lichtstrahl von allen Subpixeln bzw. allen hellen Subpixeln des Pixelabschnitts in dieselbe Richtung reflektiert wird. Dabei wird unter derselben Richtung auch noch verstanden, wenn sich die Reflexionswinkel der einzelnen Subpixel im einstelligen Grad-Bereich unterscheiden. Dies kann bewusst vorgesehen sein. Ferner kann diese Winkelabweichung deswegen vorliegen, da absolut plane und gleichmäßige Subpixel praktisch nicht herstellbar sind.

Insbesondere kann das erfindungsgemäße Flächenmuster in zumindest vier Teilbereiche, die jeweils mehrere Pixelabschnitte aufweisen, aufgeteilt sein, wobei die mindestens vier Teilbereiche betrachtungswinkelabhängig vier verschiedene Ansichten desselben Motivs mit horizontaler und vertikaler Parallaxe darbieten. Dies führt nicht nur zu einem deutlich verbesserten dreidimensionalen Eindruck bei der Betrachtung des Motivs, sondern es erlaubt zudem, das Sicherheitselement auch um eine darauf senkrecht stehende Achse zu drehen, ohne dass der stereografische dreidimensionale Eindruck verschwindet. Dies ist insbesondere dann von Vorteil, wenn das erfindungsgemäße Flächenmuster, das z.B. auf einer Banknote ausgebildet sein kann, den dreidimensionalen Eindruck unabhängig davon vermitteln soll, ob es bzw. die Banknote zur Betrachtung im Hoch- oder Querformat ausgerichtet wird.

Die Pixelabschnitte stellen bei dem erfindungsgemäßen Flächenmuster zur Halbtondarstellung nur helle und dunkle Pixel dar.

Die Pixelabschnitte können bei dem erfindungsgemäßen Flächenmuster geprägt sein. Es kann insbesondere eine geprägte Reliefstruktur vorliegen. Die Reliefstruktur kann analog zur Herstellung eines Prägehologramms in einen auf einer Trägerfolie aufgebrachten strahlungshärtenden oder thermoplastischen Lack geprägt sein.

Die geprägten Pixelabschnitte können zumindest bereichsweise mit einer reflexionserhöhenden Beschichtung versehen sein. Diese kann beispielsweise eine Metallisierung oder ein hochbrechendes Dielektrikum sein.

Das erfindungsgemäße Flächenmuster kann alleine oder kann z.B. zusammen mit einem Träger, auf dem es ausgebildet sein kann, zumindest bereichsweise transparent bzw. semi-transparent ausgebildet sein. So kann z. B. eine sehr dünne oder auch gerasterte Metallisierung vorgesehen sein. Damit kann das Flächenmuster alleine oder zusammen mit dem Träger z. B. eine Ausnehmung in einem Sicherheitspapier, einem Wertdokument oder dergleichen überspannen. So kann beispielsweise in einer Banknote ein Loch vorgesehen sein, das von dem erfindungsgemäßen Flächenmuster alleine oder zusammen mit dem Träger überspannt ist.

Ferner kann in den geprägten Pixelabschnitten zumindest bereichsweise eine farbige oder farbkippende Beschichtung vorgesehen sein. Diese kann beispielsweise als gedruckte Farbe oder Dünnfilmsystem mit Reflektor/Dielektrikum/ Absorber, Durchsicht-Colorshift mit Absorber/Dielektrikum/Absorber, Beschichtung aus flüssigkristallinem Material, insbesondere cholesterischem flüssigkristallinem Material, rein dielektrische Beschichtungen mit Schichten hoher Brechzahl, etc. ausgebildet sein.

Das erfindungsgemäße Flächenmuster kann so ausgebildet sein, dass der Winkelabstand in horizontaler und/oder vertikaler Richtung der von den beiden Teilbereichen dargebotenen Ansichten im Bereich von 1° bis 10° und insbesondere im Bereich von 3° bis 5° liegt.

Ferner ist das erfindungsgemäße Flächenmuster in eine Mehrzahl von Überpixeln aufgeteilt, in denen jeweils zumindest einer der Pixelabschnitte enthalten ist. Insbesondere kann die Anzahl der verschiedenen Pixelabschnitte pro Überpixel gleich der Anzahl der Teilbereiche sein. Alternativ ist es möglich, dass die Anzahl der Pixelabschnitte pro Überpixel kleiner ist als die Anzahl der Teilbereiche.

Die Überpixel können rechteckig oder quadratisch sein. In diesem Fall sind sie als rechteckiges oder quadratisches Raster angeordnet.

Die maximale Ausdehnung der Pixelabschnitte kann im Bereich von 2 µm bis 300 µm, bevorzugt im Bereich von 3 µm bis 50 µm und besonders bevorzugt im Bereich von 4 µm bis 20 µm liegen. Die maximale Ausdehnung kann insbesondere so gewählt sein, dass sie unter dem menschlichen Auflösungsvermögen (ohne technische Hilfsmittel) liegt, so dass ein Betrachter die einzelnen Pixelabschnitte nicht auflösen kann.

Es ist ferner möglich, dass die Pixelabschnitte streifenförmig vorgesehen sind. In diesem Fall können die Streifenbreiten zwischen 2 µm und 300 µm, bevorzugt zwischen 3 µm und 100 µm und besonders bevorzugt zwischen etwa 4 µm und 80 µm liegen.

Das erfindungsgemäße Flächenmuster weist bevorzugt mindestens drei und insbesondere mindestens fünf Teilbereiche mit unterschiedlichen Ansichten desselben Objektes auf. Die Teilbereiche können in beliebter Art und Weise ineinander verschachtelt sein. Dabei sind regelmäßige und/oder unregelmäßige Anordnungen möglich.

Es ist ferner möglich, dass das erfindungsgemäße Flächenmuster weitere Teilbereiche aufweist, mit denen Ansichten eines anderen Objektes dargestellt werden. Damit sind beispielsweise Kippeffekte oder kinematische Effekte realisierbar.

Ferner kann das erfindungsgemäße Flächenmuster noch weitere optische Effekte realisieren. So ist es beispielsweise möglich, einen Teilbereich mit einer mikrooptischen Darstellungsanordnung vorzusehen, die dem Betrachter eine reflektive Oberfläche darbietet, die gegenüber der tatsächlich makroskopischen Raumform der mikrooptischen Darstellungsanordnung gewölbt erscheint.

Die Kombination mit der mikrooptischen Darstellungsanordnung kann neben den Teilbereichen oder auch im erfindungsgemäßen Flächenmuster verschachtelt mit den anderen Teilbereichen realisiert sein.

Ferner können noch weitere bekannte Sicherheitselemente bei dem erfindungsgemäßen Flächenmuster realisiert werden, wie z. B. Modulo-Vergrößerungsanordnungen, Hologramme, insbesondere Prägehologramme, so dass die erfindungsgemäße achromatische Darstellung durch bunte holographische Elemente ergänzt wird, Volumenhologramme, Subwellenlängenstrukturen, magnetische Eigenschaften, Aussparungen in einer opaken Schicht in Form von Zeichen und Mustern (Cleartext), etc.

Bei dem erfindungsgemäßen Flächenmuster kann durch Überlagerung der Facetten mit sub-Wellenlängenstrukturen eine farbige Darstellung entstehen. Insbesondere können durch unterschiedliche sub-Wellenlängenstrukturen eine oder mehrere Darstellungen mit mehreren Farben realisiert werden. So können z.B. durch unterschiedliche sub-Wellenlängenstrukturen, insbesondere für die Farben rot, grün und blau, eine oder mehrere Darstellungen in Vollfarbe realisiert sein.

Die sub-Wellenlängenstrukturen können einfallendes weißes Licht farbig transmittieren bzw. in die nullte Beugungsordnung reflektieren. Möglichkeiten der Generierung von Farbbildern durch sub-Wellenlängengitter sind beispielsweise im Artikel von Hans Lochbihler: "Colored Images generated by metallic sub-wavelength gratings", Optics Express 17, 12189-12196 (2009), sowie der deutschen Patentanmeldung DE 10 2009 012 300.8 beschrieben, deren Offenbarungen hier mit aufgenommen werden.

Durch Kombination unterschiedlicher sub-Wellenlängenstrukturen können insbesondere auch mehrfarbige Bilder realisiert werden. In einer vorteilhaften Weiterbildung können die Pixelabschnitte der verschiedenen Teilbereiche in weitere Unterbereiche aufgeteilt werden, in denen reflektierende Facetten mit unterschiedlichen sub-Wellenlängenstrukturen vorgesehen sind. Diese Unterbereiche entsprechen dann unterschiedlichen Farbkanälen der zugehörigen Ansicht, für die separate Halbtonrasterungen durchgeführt werden können. Im Prinzip lassen sich so dreidimensionale Halbtondarstellungen mit beliebig vielen Farben, insbesondere bei Verwendung von sub-Wellenlängenstrukturen für die Farben rot, grün und blau auch Vollfarbendarstellungen, erzeugen.

Alternativ zur Verwendung von sub-Wellenlängenstrukturen kann das erfindungsgemäße und an sich achromatische Flächenmuster aber natürlich auch mit beliebigen anderen Farben, insbesondere mit metallisch oder nicht metallisch wirkenden, lasierenden oder opaken Farben ein- oder beidseitig über- oder unterdruckt werden. Mit Vorteil erfolgt ein solcher Über- oder Unterdruck mehrfarbig und/oder im Register zu den vorzugsweise geprägten Facettenstrukturen.

Das erfindungsgemäße Flächenmuster kann als Sicherheitselement, insbesondere als Sicherheitsfaden, Aufreißfaden, Sicherheitsband, Sicherheitsstreifen, Patch oder als Etikett zum Aufbringen auf ein Sicherheitspapier, Wertdokument oder dergleichen ausgebildet sein.

Unter dem Begriff Sicherheitspapier wird hier insbesondere die noch nicht umlauffähige Vorstufe zu einem Wertdokument verstanden, die neben dem erfindungsgemäßen Sicherheitselement auch weitere Echtheitsmerkmale (wie z. B. im Volumen vorgesehene Lumineszenzstoffe) aufweisen kann. Dabei umfasst der Begriff Sicherheitspapier nicht nur Papiere, sondern z.B. auch Kunststoff- oder Verbundsubstrate, insbesondere für Banknoten. Unter Wertdokumenten werden hier einerseits aus Sicherheitspapieren hergestellte Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsprüfung möglich ist und zugleich unerwünschtes Kopieren verhindert wird.

Es wird ferner bereitgestellt ein Wertdokument mit einem erfindungsgemäßen Flächenmuster oder einer Weiterbildung des erfindungsgemäßen Flächenmusters.

Das erfindungsgemäße optisch variable Flächenmuster kann auch als optisch variable Facettenanordnung bezeichnet werden. Ferner kann das erfindungsgemäße Flächenmuster als Master zur Belichtung von Volumenhologrammen oder zu rein dekorativen Zwecken benutzt werden.

Die Sägezahngitter können periodisch oder aperiodisch sein. Bei aperiodischen Gittern können in vorteilhafter Weise Beugungseffekte, insbesondere Farbeffekte, wie z.B. diffraktive Farbeinstreuung, vermieden werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Zur besseren Anschaulichkeit wird in den Figuren auf eine maßstabs- und proportionsgetreue Darstellung verzichtet. Es zeigen:
Fig. 1 eine Draufsicht einer Banknote mit einem erfindungsgemäßen optisch variablen Flächenmuster als Sicherheitselement;
Fig. 2 eine vergrößerte Draufsicht des Flächenmusters von Fig. 1;
Fig. 3 eine Schwellwertmatrix, die zur Erzeugung gerasteter Halbtonbilder verwendet wird;
Fig. 4A-4D mit der Matrix gemäß Fig. 3 gerasterte Halbtondarstellungen desselben Motivs aus unterschiedlichen Betrachtungsrichtungen;
Fig. 4E eine vergrößerte Darstellung des Details D von Fig. 4A;
Fig. 5 eine Darstellung des für die Beschreibung des Ausführungsbeispiels verwendeten Koordinatensystems;
Fig. 6 eine Darstellung zur Erläuterung der unterschiedlichen Reflexionsrichtungen der verschiedenen Ansichten;
Fig. 7 eine vergrößerte Detailansicht eines Überpixels 12 gemäß Fig. 2;
Fig. 8 eine Darstellung zur Erläuterung einer Ausführungsform mit acht verschiedenen Ansichten, und
Fig. 9 eine Darstellung zur Erläuterung von farbigen Facetten bei dem erfindungsgemäßen Flächenmuster.

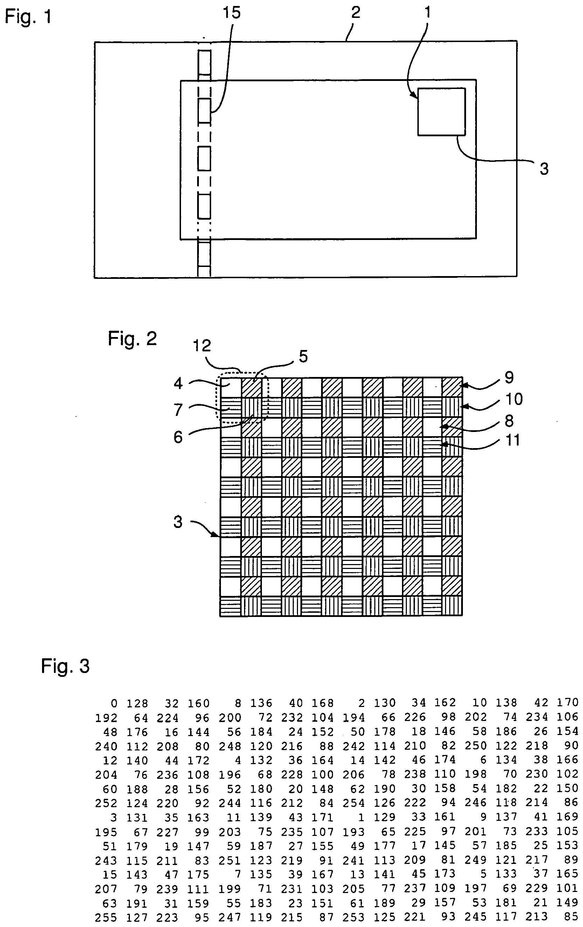

Bei der in Fig. 1 gezeigten Ausführungsform ist das erfindungsgemäße optisch variable Flächenmuster als Sicherheitselement 1 so in einer Banknote 2 integriert, dass das Sicherheitselement 1 in der in Fig. 1 gezeigten Vorderseite der Banknote 2 sichtbar ist. Alternativ kann das erfindungsgemäße Sicherheitselement auch als Fensterfaden 15 vorliegen.

Das Sicherheitselement 1 ist als reflektives Stereogramm ausgebildet und weist einen quadratischen Motivbereich 3 auf. Der Motivbereich 3 kann jedoch auch jede andere Umrissform haben, so kann er beispielsweise rechteckig, rund, oval, etc. sein. Der Motivbereich 3 kann auch eine beliebig geformte und gekrümmte Freiformfläche sein (z.B. Flaschenetikett).

Wie insbesondere aus der vergrößerten schematischen Darstellung des Motivbereiches 3 in Fig. 2 ersichtlich ist, weist der Motivbereich 3 erste Pixelabschnitte 4 (Quadrate ohne Schraffur), zweite Pixelabschnitte 5 (Quadrate mit diagonal verlaufender Schraffur), dritte Pixelabschnitte 6 (Quadrate mit senkrechter Schraffur) sowie vierte Pixelabschnitte 7 (Quadrate mit waagerechter Schraffur) auf. Die ersten Pixelabschnitte 4 bilden einen ersten Teilbereich 8 des Motivbereichs 3, die zweiten Pixelabschnitte 5 bilden einen zweiten Teilbereich 9, die dritten Pixelabschnitte 6 bilden einen dritten Teilbereich 10 und die vierten Pixelabschnitte 7 bilden einen vierten Teilbereich 11.

In dieser Art und Weise ist der reflektive Motivbereich 3 in vier Teilbereiche 8 bis 11 aufgeteilt, wobei, wie nachfolgend noch im Detail beschrieben wird, die Teilbereiche 8 bis 11 zu unterschiedlichen Betrachtungsrichtungen gehörende Ansichten desselben Motivs so darbieten, dass ein achromatisches Stereogramm vorliegt, wobei jede der durch die Teilbereiche 8 bis 11 bereitgestellten Ansichten eine Halbtondarstellung ist. Für den Betrachter erscheinen somit die einzelnen Ansichten nicht nur als schwarz-weiß Ansichten, sondern es werden auch dazwischen liegende Helligkeits- bzw. Grauwerte dargestellt.

Um nun beispielsweise als Motiv ein dreidimensional erscheinendes Halbtonportrait einer Person mit vier Ansichten zu realisieren, kann wie folgt vorgegangen werden.

Es wird dabei vorausgesetzt, dass vier Ansichten der Person aus mit jeweils um 5° bezüglich der horizontalen Komponente verschiedenen Richtungen vorliegen. Bei der hier beschriebenen Ausführungsform liegen diese Ansichten bereits als Pixelbilder mit jeweils 250 x 250 Pixel und 256 Graustufen vor. Solche Ansichten können beispielsweise für eine virtuelle Person aus 3D-Datensätzen von einem Computer berechnet oder von einer realen Person mit geeignet positionierter Digitalkamera aufgenommen werden.

Der Motivbereich 3 wird in 250 x 250 Überpixel 12 aufgeteilt, die ihrerseits wiederum in die vier Pixelabschnitte 4-7 für die verschiedenen Ansichten aufgeteilt werden, wie in. Fig. 2 angedeutet ist. In Fig. 2 sind zur Vereinfachung der Darstellung nur 144 Pixelabschnitte und somit nur 36 Überpixel 12 dargestellt.

Zur Erzeugung der gewünschten Graustufen wird eine Halbtonrasterung für jede der vier Ansichten durchgeführt.

Die Halbtonrasterung kann beispielsweise mittels eines Schwellwertmatrizen-Verfahrens durchgeführt werden. Dazu wird jedem Überpixel 12 ein Eintrag einer Schwellwertmatrix zugeordnet, so dass das Graustufenbild in ein schwarz-weiß Bild umgewandelt wird. Dazu wird der Grauwert jedes Pixels im Ausgangsbild mit dem entsprechenden Eintrag der Schwellwertmatrix verglichen und genau dann weiß gesetzt, wenn der Grauwert größer als der Eintrag der Schwellwertmatrix ist. Andernfalls wird das Pixel im gerasterten Bild schwarz.

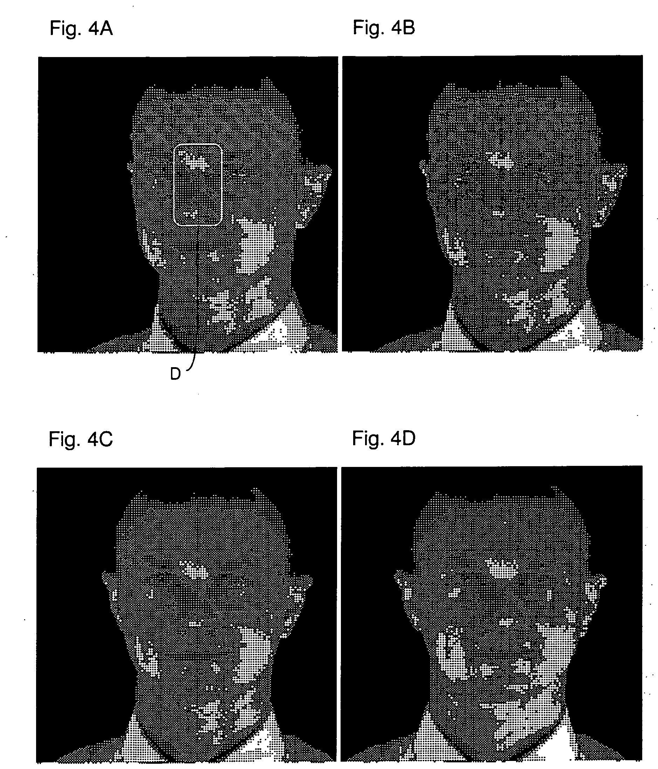

Als Fig. 3 wird eine 16 x 16 Bayermatrix M gezeigt, die zur Erzeugung der Halbtonbilder verwendet wurde, wobei die Matrix M bzw. ihre periodischen Fortsetzungen verwendet wurden, um die Pixelwerte zu erhalten. In den Fig. 4A-4D sind die entsprechenden gerasterten Ansichten gezeigt.

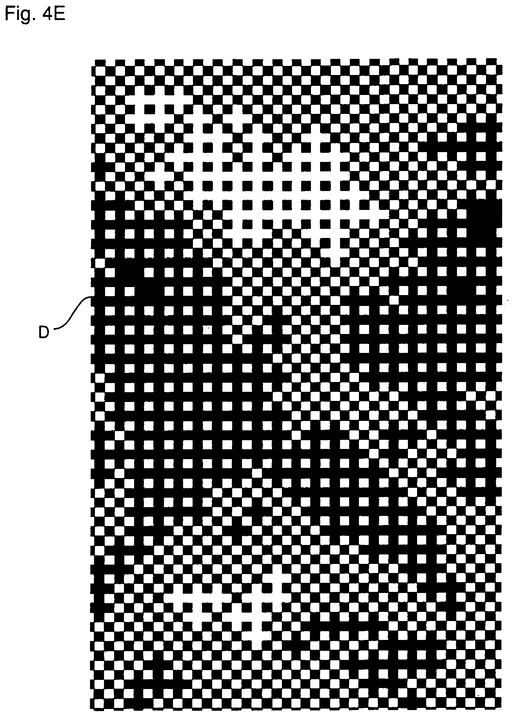

Nach der Halbtonrasterung weisen Bilder somit nur weiße und schwarze Pixel auf, wie z. B. in der vergrößernden Darstellung des Abschnittes D aus Fig. 4A in Fig. 4E ersichtlich ist.

Neben dem beschriebenen Schwellwertmatrizen-Verfahren können natürlich auch andere bekannte Rasterverfahren eingesetzt werden, um die gerasteten Ansichten zu berechnen. So können beispielsweise stochastische Rasterverfahren und insbesondere "error diffusion"-Verfahren eingesetzt werden. Es wird hierzu auf Henry R. Kang: "Digital Color Halftoning", ISBN 0-7803-4741-2, verwiesen.

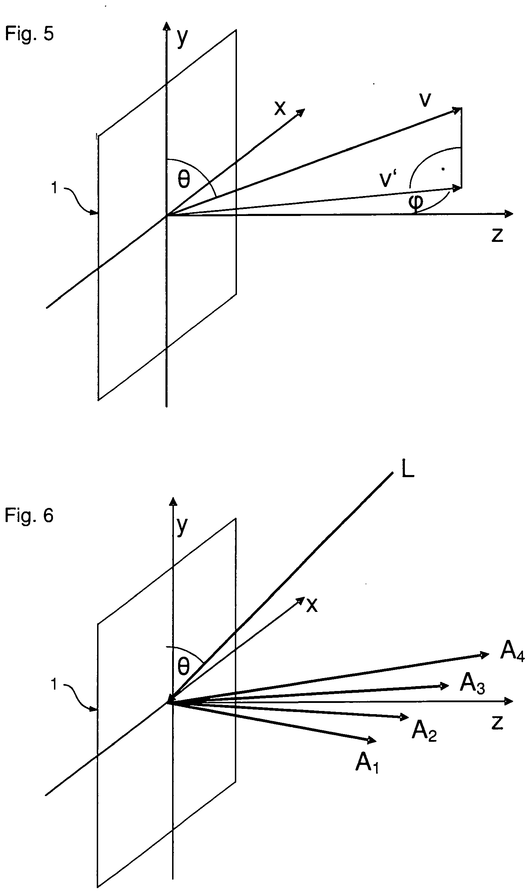

Für die folgenden Ausführungen wird das in Fig. 5 gezeigte Koordinatensystem benutzt. Die x-, y- und z-Achsen bilden ein Orthonormalsystem, bei dem die x-Achse in horizontaler Richtung und die y-Achse in vertikaler Richtung zeigt. Das erfindungsgemäße Sicherheitselement 1 steht senkrecht und liegt in der durch die x- und y-Achse aufgespannten Ebene. Für einen beliebigen Richtungsvektor v bezeichnen θ den Winkel, den v mit der y-Achse einschließt. v' bezeichnet die Projektion des Vektors v in die x-z-Ebene und ϕ sei der Azimutwinkel, d.h. der Winkel, den der Vektor v' mit der z-Achse einschließt.

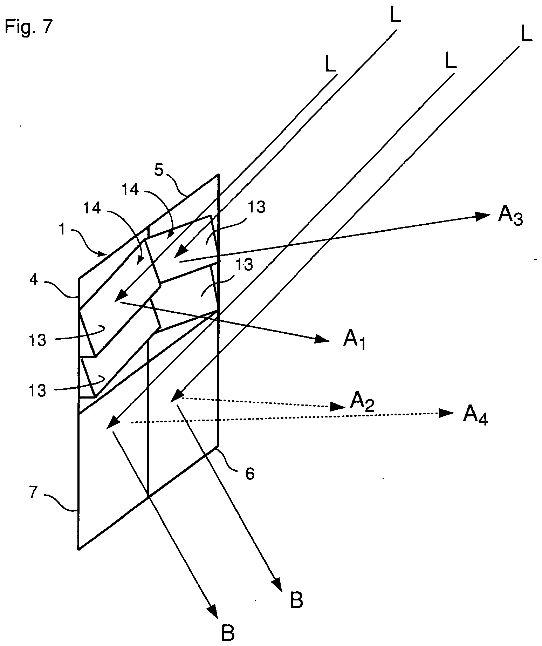

Es wird nun der Fall betrachtet, dass aus einer gegebenen Richtung L weißes Licht auf das Sicherheitselement 1 fällt (Fig. 6). Die Richtung L kann beispielsweise so gewählt werden, dass die zugehörigen Winkel θ = 45° und ϕ = 0° sind. Die Orientierungen der reflektiven Facetten 13 (vgl. Fig. 7) oder des Sägezahngitters der hell darzustellenden und somit weißen Pixel werden nun beispielsweise so gewählt, dass das aus der Richtung L einfallende Licht stets in eine Richtung innerhalb der x-z-Ebene reflektiert wird. Die Reflexion wird aufgrund der Orientierung der Facetten 13, die auch als Subpixel bezeichnet werden können, so stattfinden, dass sich die zugehörigen Azimutwinkel ϕ um jeweils 5° unterscheiden. Somit ergeben sich für die in den unterschiedlichen Pixelabschnitten 4-7 reflektierten Strahlen beispielsweise die Winkel ϕ₁ = -7,5°, ϕ₂ = -2,5°, ϕ₃ = 2,5° und ϕ₄ = 7,5°, wie in Fig. 6 schematisch dargestellt ist. Die zugehörigen Richtungen werden in der nachfolgenden Beschreibung mit A₁ bis A₄ bezeichnet.

In Fig. 7 ist beispielhaft gezeigt, wie ein solches Reflexionsverhalten mit Sägezahnstrukturen 14 realisiert sein kann. Der erste Pixelabschnitt 4 soll hier ein Pixel der ersten Ansicht (Richtung A₁) sein, das aus der entsprechenden Betrachtungsrichtung hell ist. Dazu werden im ersten Pixelabschnitt 4 Sägezahnstrukturen 14 positioniert, deren flache Seite 13 so orientiert ist, dass sie aus der Richtung L einfallendes Licht in die entsprechende Richtung A₁ reflektiert.

Solche Sägezahnstrukturen 14 können beispielsweise Zähne mit einer Breite zwischen 3 µm und 30 µm aufweisen. Die ersten Pixelabschnitte 4 können beispielsweise quadratisch mit einer Kantenlänge zwischen 6 µm und 60 µm sein, so dass mehrere Sägezähne in einem ersten Pixelabschnitt 4 Platz finden. Die Sägezahnstrukturen können periodisch oder aperiodisch sein. Statt Sägezahnstrukturen 14 können in den einzelnen Pixelabschnitten 4-7 auch einfache Facetten (nicht gezeigt) vorliegen, die eine entsprechende Reflexion des einfallenden Lichtes bewirken.

Die Abmessungen der anderen Pixelabschnitte 5-7 können gleich sein wie beim ersten Pixelabschnitt.

Der zweite Pixelabschnitt 5 in Fig. 7 sei ein in der Ansicht aus Richtung A₃ hell erscheinendes Pixel. Dazu wird hier eine entsprechende Sägezahnstruktur 14 positioniert, die aus Richtung L einfallendes Licht in Richtung A₃ reflektiert.

Dunkle Pixel können im einfachsten Fall so gestaltet sein, dass in den entsprechenden Pixeln nur eine ebene Fläche vorliegt, die aus Richtung L einfallendes Licht dann in eine Richtung B reflektiert, die im Gegensatz zu in Richtung A₁ bis A₄ nicht in der x-z-Ebene liegt. In Fig. 7 ist dies für den dritten und vierten Pixelabschnitt 6, 7 gezeigt. Aus den Richtungen A₁ bis A₄ (im Fall des dritten Pixelabschnittes 6 insbesondere aus Richtung A₂ und im Fall des vierten Pixelabschnittes 7 insbesondere aus Richtung A₄) erscheint ein solches Pixel damit dunkel.

Ein Betrachter betrachtet das Sicherheitselement 1 nun aus einer Richtung, die in etwa der z-Achse entspricht. Unter der Annahme eines Augenabstandes von etwa 7 cm und einem Abstand zum Sicherheitselement 1 von etwa 40 cm ergibt sich, dass die Betrachtungsrichtung des linken und rechten Auges des Betrachters etwa 10° verschieden sind. Je nach genauer Position des Betrachters sieht dieser beispielsweise mit dem linken Auge nur die in Richtung A₁ reflektierenden Pixel hell aufleuchten und mit dem rechten Auge nur die in Richtung A₃ reflektierenden Pixel. Die in Richtung A₁ reflektierenden Pixel bieten dem linken Auge in ihrer Gesamtheit eine erste Ansicht des Motives bzw. Bildes, während die in Richtung A₃ reflektierenden Pixel dem rechten Auge des Betrachters eine zweite Ansicht des Portraits liefern. Dem linken Auge wird somit die Ansicht gemäß Fig. 4A geliefert, wohingegen dem rechten Auge die Ansicht gemäß Fig. 4C dargeboten wird.

Aus diesen beiden Ansichten entsteht dann für den Betrachter ein dreidimensionales Bild.

Dreht der Betrachter das Sicherheitselement 1 etwas um die y-Achse, so kann das linke Auge beispielsweise die Ansicht aus Richtung A₂ sehen (was der Darstellung gemäß Fig. 4B entspricht) und das rechte Auge die Ansicht der Richtung A₄ (entspricht der Darstellung gemäß Fig. 4D). Auch diese beiden Ansichten liefern zusammen wieder ein stereografisches dreidimensionales Bild. Zusätzlich tritt im Vergleich zu den vorherigen Ansichten A₁ und A₃ eine horizontale Parallaxe auf, die den dreidimensionalen Eindruck weiter verstärkt. In Fig. 7 sind die beiden Pixel dieser Ansichten schwarze Pixel. Natürlich weisen diese Ansichten auch helle Pixel auf, so dass die gewünschte Ansichten gemäß Fig. 4B und 4D dargestellt werden können.

Das erfindungsgemäße Sicherheitselement 1 funktioniert nicht nur exakt bei den beschriebenen Beleuchtungsverhältnissen und Betrachtungsrichtungen, für die es ausgelegt wurde. Die Erfahrung zeigt, dass ein Betrachter das Sicherheitselement 1 in der Regel sehr schnell "automatisch" in eine geeignete Ausrichtung kippt bzw. dreht, in der sich ihm ein stereografischer dreidimensionaler Eindruck ergibt.

Ferner spalten selbst perfekt parallel einfallende Lichtstrahlen L nicht in scharfe Strahlen A₁ bis A₄ auf. Vielmehr sind diese Strahlen A₁-A₄ in der Praxis eher als Kegel zu verstehen, deren Mittelachse durch die eingezeichneten Strahlen dargestellt ist und deren Öffnungswinkel bzw. Divergenz mehrere Grad betragen kann.

Ursachen dafür sind beispielsweise die herstellungsbedingt gewollt oder ungewollt nie perfekt ebenen Oberflächen der reflektierenden Facetten 13 sowie unter Umständen Beugungseffekte. In der Praxis führt zudem die Ausdehnung der Lichtquelle zur Einsehbarkeit aus einem größeren Winkelbereich.

Bevorzugt werden die Winkeldifferenzen der verschiedenen Ansichten und die Breite der reflektierten Lichtkegel so aufeinander abgestimmt, dass beispielsweise bei Drehung um die y-Achse die Ansichten der Richtungen A₁ bis A₄ weich ineinander übergehen. Sind die Winkeldifferenzen der Ansichten wesentlich kleiner als die Divergenz der Lichtkegel, so springt das Bild bei Rotation um die y-Achse ruckartig von einer Ansicht in die nächste. Zusätzlich treten Schwankungen der Gesamthelligkeit auf, die bewirken, dass die Darstellung beim Drehen des Sicherheitselements flackert. Ein solches Springen oder Flackern kann dadurch beseitigt werden, dass die eine bestimmte Ansicht bildenden reflektiven Facetten 13 nicht alle exakt in die gleiche Richtung reflektieren, sondern die Reflexionsrichtungen bereits innerhalb eines vorgegebenen Winkelbereiches, beispielsweise um ± 1°, variieren.

Die Anzahl n der Teilbereiche 8-11 und die Winkelabstände der zugehörigen Ansichten können in gewissen Grenzen praktisch beliebig gewählt werden. Da bei der beschriebenen Ausführungsform zumindest ein stereografisches Bild gewünscht ist, sind mindestens zwei Ansichten nötig. Die Winkelabstände der Bilder werden bevorzugt klein genug gewählt, um den beiden Augen des Betrachters auch tatsächlich unterschiedliche Bilder zu liefern. In der Praxis läuft das auf eine Winkeldifferenz von 10° oder weniger, beispielsweise 3° bis 5°, hinaus.

In dem bisher beschriebenen Ausführungsbeispiel unterscheiden sich die Richtungen der unterschiedlichen Ansichten bzw. die Reflexionsrichtungen A₁-A₄ der Pixelabschnitte lediglich im Azimutwinkel ϕ bzw. in ihrer horizontalen Komponente.

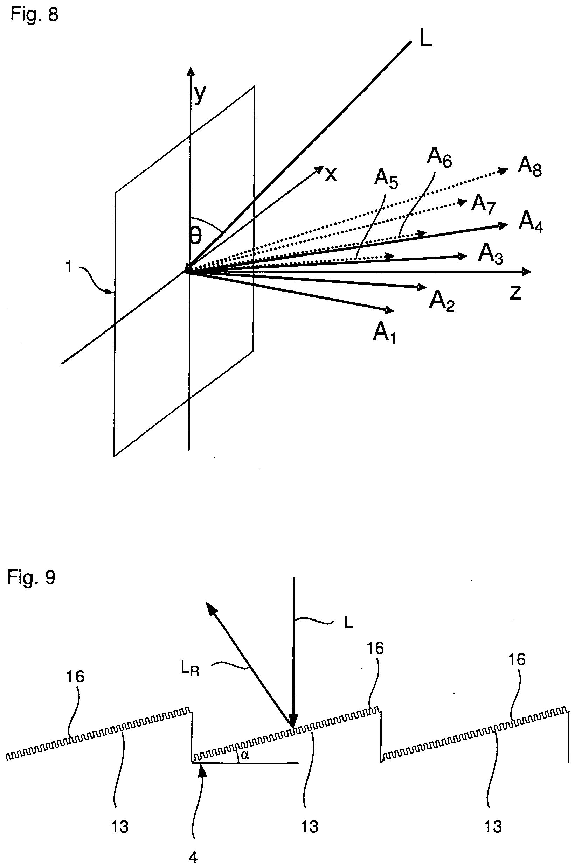

Gemäß einer weiteren Ausführungsform können sich die Reflexionsrichtungen jedoch auch in ihrer vertikalen Komponente unterscheiden. In Fig. 8 ist ein Beispiel mit insgesamt acht unterschiedlichen Reflexionsrichtungen gezeigt, von denen nur die ersten vier A₁-A₄ horizontal, also in der x-z-Ebene liegen. Die anderen Richtungen haben auch eine vertikale Komponente, so dass die Pixelabschnitte 4-7 mit den Reflexionsrichtungen A₅-A₈ etwas nach oben relativ zu den Richtungen A₁-A₄ reflektieren.

Zur Erzeugung einer vertikalen Parallaxe zeigen die Ansichten der Richtungen A₅ bis As nun Ansichten des Objektes, bei denen man etwa von oben auf das Objekt schaut. Bewegt der Betrachter seinen Kopf nach oben oder kippt er das Sicherheitselement 1 entsprechend um die x-Achse, so schaut er vermeintlich auch von oben auf das dreidimensional dargestellte Objekt, was den dreidimensionalen Eindruck weiter verstärkt. Ferner kann das Sicherheitselement nun auch in der x-y-Ebene um 90° gedreht werden, ohne dass der dreidimensionale Eindruck verschwindet. Bei geeigneter Beleuchtung würde sich einem Beobachter nun beispielsweise aus den Ansichten A₂ und A₆ oder A₃ und A₇ stereografisch ein dreidimensionaler Eindruck ergeben.

Natürlich können in einer weiteren Ausführungsform auch noch Pixelabschnitte mit Reflexionsrichtungen eingeführt werden, die bezogen auf die Richtungen A₁-A₄ nach unten zeigen, so dass der Betrachter bei entsprechender Kopfbewegung oder Drehung um die x-Achse das dreidimensional dargestellte Objekt auch von unten betrachten kann.

Statt der Bereitstellung der vertikalen Parallaxe können die Ansichten A₅-A₈ gemäß Fig. 8 aber auch anders genutzt werden. Beispielsweise können die Ansichten A₅ bis A₈ Ansichten eines zweiten Objektes zeigen. Beim Kippen des Sicherheitselementes um die x-Achse könnte so eine stereografische Darstellung eines ersten Objektes in die Darstellung eines gegebenenfalls völlig verschiedenen zweiten Objektes kippen, das ebenfalls stereografisch dreidimensional dargestellt sein kann.

Das zweite dargestellte Objekt kann dem ersten aber auch sehr ähnlich sein. Dies kann z.B. dazu genutzt werden, dass sich beim Kippen nur ein Teil verändert. So könnte beispielsweise eine dargestellte Person ein Auge schließen oder eine kleine Zahl in ein Symbol kippen.

Natürlich kann dieses Kippen oder Wechseln von Objekten auch mit mehr als zwei Objekten realisiert werden. So könnten beispielsweise weitere Pixelabschnitte mit weiterer Reflexionsrichtung vorgesehen werden, bei denen dann beim Kippen eben ein drittes oder noch weitere Objekte dargestellt werden. Grundsätzlich lassen sich so auch kinematische Effekte generieren, die insbesondere auch dreidimensional wirken können.

Auch die in Fig. 2 schematisch gezeigte Aufteilung des Motivbereiches bzw. Verschachtelung der einzelnen Teilbereiche 8-11 kann im Prinzip beliebig ausgeführt sein. Sie kann neben der gezeigten Aufteilung in vier- bzw. insbesondere rechteckige Überpixel 12 beispielsweise auch in drei- oder sechseckige Überpixel oder durch eine Aufteilung in Streifen realisiert sein.

Die Aufteilung der Überpixel 12 in die Pixelabschnitte 4-7 kann für alle Überpixel 12 gleich sein. Die Aufteilung muss aber nicht für jedes Überpixel 12 gleich sein. Es kann auch eine Variation zwischen verschiedenen Überpixeln 12 vorliegen.

Um ein dunkles Pixel darzustellen, kann neben der beschriebenen Reflexion in eine nicht genutzte Richtung der entsprechende Pixelabschnitt geschwärzt sein. Dies kann durch Prägen von Mottenaugenstrukturen oder Überdrucken mit dunkler Farbe realisiert sein. Auch können in diesen Pixelabschnitten, wie in Fig. 7 gezeigt ist, keine reflektiven Facetten 13 bzw. keine Sägezahnstrukturen 14 vorgesehen sein.

Neben der Halbtondarstellung mittels der beschriebenen Halbtonrasterung kann gemäß einer nicht beanspruchten Ausführungsform auch eine Anpassung des Reflexionsgrades der einzelnen Pixelabschnitte 4-7 durchgeführt werden. Dadurch kann die Helligkeit variiert werden, was zu der gewünschten Halbtondarstellung führt. So können beispielsweise die Größe und/ oder die Anzahl der reflektiven Facetten 13 geeignet variiert werden. Bei dem Vorsehen von Sägezahnstrukturen 13 kann beispielsweise nur ein Teilbereich des entsprechenden Pixelabschnittes 4-6 mit Sägezähnen bedeckt sein.

Wenn man das oben beschriebene Konzept der Überpixel 12, die jeweils die n zu verschiedenen Ansichten gehörenden Pixelabschnitte 4-7 enthalten, mit der beschriebenen Halbtonrasterung kombiniert, kann es vorkommen, dass in keinem einzigen Überpixel 12 alle Pixelabschnitte 4-7 hell bzw. weiß sind. So ist zum Beispiel bei der beschriebenen Wiedergabe eines Portraits meist nur in wenigen Pixeln der maximale Grauwert vorhanden, die dann bei den verschiedenen Ansichten auf unterschiedliche Überpixel 12 verteilt sind. In solchen Fällen kann die Helligkeit der mittels des erfindungsgemäßen Sicherheitselementes 1 dargestellten Ansichten gesteigert werden, wenn die

Anzahl der Pixelabschnitte 4-7 nicht mehr der Gesamtanzahl der Ansichten entspricht, sondern lediglich der Anzahl, die nötig ist, um in jedem Überpixel alle hellen Pixelabschnitte 4-7 der verschiedenen Ansichten unterzubringen.

Wenn mit dem erfindungsgemäßen Sicherheitselement beispielsweise acht verschiedene Ansichten desselben Portraits dargestellt werden, kann es vorkommen, dass kein Überpixel 12 nur helle Pixelabschnitte (also acht helle Pixelabschnitte) enthält, sondern dass beispielsweise maximal sechs helle Pixelabschnitte pro Überpixel 12 auftreten. Damit würde jedes Überpixel 12 also mindestens zwei dunkle Pixelabschnitte aufweisen, auf die aber ohne Nachteil in Bezug auf die optische Wirkung verzichtet werden kann. Wenn man nun in diesem Fall jedes Überpixel 12 in nur sechs Pixelabschnitte aufteilt, in die entsprechend maximal sechs helle Pixelabschnitte mit entsprechend orientierten Facetten 13 gesetzt werden, kann in vorteilhafterweise eine größere Helligkeit erreicht werden.

So können beispielsweise in einem ersten Überpixel 12 nur die Pixelabschnitte der Ansichten 1, 2, 3, 5, 6 und 7 hell sein, während die Ansichten 4 und 8 nach der Halbtonrasterung dunkel sind. Dann genügt es, in dem ersten Überpixel 12 sechs helle Pixelabschnitte mit den Orientierungen der entsprechenden Ansichten 1, 2, 3, 5, 6 und 7 zu plazieren. Gleiches gilt für die weiteren Überpixel 12.

Die Fläche pro Pixelabschnitt kann dann im Vergleich zu den obigen Ausführungen (bei denen die Anzahl der Pixelabschnitte pro Überpixel der Anzahl der Ansichten entspricht) um einen Faktor 8/6 größer sein, womit die Gesamthelligkeit oder "Brillanz" des Sicherheitselementes 1 um ein Drittel größer ist.

Diese Art der Helligkeitsoptimierung kann auch für den Fall eingesetzt werden, dass nur zwei Ansichten mit dem erfindungsgemäßen Sicherheitselement dargeboten werden. Zeigen beispielsweise die zwei Ansichten 1 und 2 jeweils 50% Helligkeit, so weisen die Überpixel abwechselnd zwei helle Pixelabschnitte und zwei dunkle Pixelabschnitte dieser Ansichten auf, wenn beispielsweise dieselbe Schwellwertmatrix M benutzt wurde. Damit würde sich die Anzahl der Pixelabschnitte pro Überpixel nicht reduzieren lassen.

Wenn jedoch unterschiedliche Schwellwertmatrizen für die beiden Ansichten verwendet werden, können die Schwellwertmatrizen so gewählt sein, dass pro Überpixel abwechselnd ein heller Pixelabschnitt einer der beiden Ansichten und ein dunkler Pixelabschnitt der anderen der beiden Ansichten vorliegt. So kann beispielsweise für die erste Ansicht die Matrix M₁ = M verwendet werden und für die zweite Ansicht die Matrix M₂ = 255 - M. Damit genügt es, pro Überpixel 12 für beide Ansichten zusammen nur einen Pixelabschnitt mit entsprechend größerer Fläche vorzusehen. Analog kann man bei mehr als zwei Ansichten zum Beispiel für alle geradzahligen Ansichten die Matrix M₁ und für alle ungeradzahligen Ansichten die Matrix M₂ verwenden.

In Fig. 9 ist schematisch der erste Pixelabschnitt 4 mit drei Facetten 13 dargestellt, wobei die Facetten jeweils mit einer sub-Wellenlängenstruktur 16 überlagert sind bzw. diese auf ihrer Oberseite aufweisen. Die sub-Wellenlängenstrukturen 16 reflektieren einfallendes weißes Licht L in die durch die Orientierung der Facetten 13 (in Fig. 8 ist der Neigungswinkel α der Facetten eingezeichnet) gegebene Richtung in der durch die sub-Wellenlängenstrukturen 16 auf den Facetten 13 bestimmten Farbe. Der reflektierte Lichtstrahl ist als L_{R} bezeichnet.

Das erfindungsgemäße Sicherheitselement kann neben den beschriebenen Teilbereichen in einer weiteren Ausgestaltung noch zumindest einen weiteren Teilbereich aufweisen, der andere optische Eigenschaften aufweist. Dieser weitere Teilbereich kann beispielsweise eine mikrooptische Darstellungsanordnung umfassen, die dem Betrachter eine reflektive Oberfläche darbietet, die gegenüber der tatsächlichen makroskopischen Raumform der mikrooptischen Darstellungsanordnung gewölbt erscheint. So kann die mikrooptische Darstellungsanordnung eine Vielzahl von reflektiven Facetten mit zueinander unterschiedlichen Orientierungen, eine reflektive Fresnel-Struktur (z.B. mit variierender Gitterperiode) und/oder eine asymmetrische Beugungsstruktur aufweisen.

Die mikrooptische Darstellungsanordnung ist insbesondere so ausgebildet, dass sie die gegenüber der tatsächlichen Raumform der mikrooptischen Darstellungsanordnung gewölbt erscheinende reflektive Oberfläche in einem reliefartigen dreidimensionalen Eindruck darbietet.

Die so dargebotene reflektive Oberfläche funktioniert bei praktisch allen Beleuchtungsverhältnissen. Eine Besonderheit dieser reflektierenden Oberfläche ist, dass der Betrachter auf der dargestellten reflektierenden Oberfläche Lichtreflexe und unter Umständen auch entsprechend verzerrte Spiegelbilder der Umgebung sehen kann. Die Tiefenwirkung dieser Darstellung ist begrenzt, da der Betrachter die Tiefe nur indirekt aus der nachgestellten Wölbung erahnt. Diese Darstellung weist außerdem keine Parallaxe auf.

Das erfindungsgemäße Sicherheitselement kann z.B. auch als Sicherheitsstreifen 15 ausgebildet sein, wie in Fig. 1 dargestellt ist.

Insbesondere kann das erfindungsgemäße Sicherheitselement 1 auch für Polymer- oder Hybridbanknoten ausgebildet sein. In diesem Fall kann das Sicherheitselement 1 innerhalb oder außerhalb kaschierter Polymerfolien angebracht sein oder vor dem Kaschieren auf eine der Deckfolien aufgebracht sein.

Nachdem bei den Ausführungsbeispielen das erfindungsgemäße optisch variable Flächenmuster 1 als Sicherheitselement eingesetzt wurde, wurde es häufig auch als Sicherheitselement bezeichnet. Jedoch ist das erfindungsgemäße Flächenmuster nicht darauf beschränkt. Insbesondere kann es beispielsweise als Master zur Belichtung von Volumenhologrammen oder zu rein dekorativen Zwecken eingesetzt werden.

**Bezugszeichenliste**

| | |
|---|---|
| 1 | Sicherheitselement |
| 2 | Banknote |
| 3 | Motivbereich |
| 4 | erster Pixelabschnitt |
| 5 | zweiter Pixelabschnitt |
| 6 | dritter Pixelabschnitt |
| 7 | vierter Pixelabschnitt |
| 8 | erster Teilbereich |
| 9 | zweiter Teilbereich |
| 10 | dritter Teilbereich |
| 11 | vierter Teilbereich |
| 12 | Überpixel |
| 13 | reflektive Facette |
| 14 | Sägezahnstruktur |
| 15 | Sicherheitsstreifen |
| 16 | sub-Wellenlängengitter |
| L | einfallender Lichtstrahl |
| L_{R} | reflektierter Lichtstrahl |
| A₁-A₈ | Richtungen der dargestellten Ansichten |
| D | Detail |

## Patentansprüche

1. Optisch variables Flächenmuster, das in zumindest einen ersten Teilbereich (8) mit mehreren ersten Pixelabschnitten (4) und einen zweiten Teilbereich (9) mit mehreren zweiten Pixelabschnitten (5) aufgeteilt ist,
wobei die beiden Teilbereiche (8, 9) betrachtungswinkelabhängig zwei verschiedene Ansichten desselben Motivs so darbieten, dass bei einem Betrachter ein dreidimensionaler Bildeindruck entsteht,
wobei das Flächenmuster (3) als reflektives und/ oder refraktives Flächenmuster ausgebildet und in eine Mehrzahl von Überpixeln (12) aufgeteilt ist, in denen jeweils zumindest einer der Pixelabschnitte (4, 5) enthalten ist, wobei mittels der Pixelabschnitte (4, 5) der beiden Teilbereiche (8, 9) jeweils eine gerasterte Halbtondarstellung der entsprechenden Ansicht bewirkt ist, wobei die Pixelabschnitte (4, 5) zur Halbtondarstellung nur helle und dunkle Pixel darstellen, die mit einem Halbtonrasterverfahren erzeugt sind,
und wobei in den Pixelabschnitten (4, 5) jeweils eine reflektive und/oder refraktive Facette oder mehrere reflektive und/oder refraktive Facetten, die ein Sägezahngitter bilden, mit den Abmessungen zwischen 2 µm und 300 µm vorliegen.

2. Optisch variables Flächenmuster nach Anspruch 1, **dadurch gekennzeichnet, dass** die Pixelabschnitte geprägt sind.

3. Optisch variables Flächenmuster nach Anspruch 2, **dadurch gekennzeichnet, dass** die geprägten Pixelabschnitte zumindest bereichsweise mit einer reflexionserhöhenden Beschichtung versehen sind, oder dass die geprägten Pixelabschnitte zumindest bereichsweise mit einer farbigen oder farbkippenden Beschichtung, insbesondere einer gedruckten Farben und/ oder einem Dünnfilmsystem mit Absorber/Dielektrikum/Reflektor, beschichtet sind.

4. Optisch variables Flächenmuster nach einem der obigen Ansprüche, **dadurch gekennzeichnet, dass** der Winkelabstand in horizontaler und/ oder vertikaler Richtung der von den beiden Teilbereichen dargebotenen Ansichten im Bereich von 1° bis 10° und insbesondere im Bereich von 3° bis 5° liegt.

5. Optisch variables Flächenmuster nach einem der obigen Ansprüche, **dadurch gekennzeichnet, dass** die Anzahl der Pixelabschnitte (4, 5) pro Überpixel (12) gleich der Anzahl der Teilbereiche ist.

6. Optisch variables Flächenmuster nach einem der Ansprüche 1 bis 4, **dadurch gekennzeichnet, dass** die Anzahl der Pixelabschnitte (4-7) pro Überpixel (12) kleiner ist als die Anzahl der Teilbereiche (8-11).

7. Optisch variables Flächenmuster nach einem der obigen Ansprüche, **dadurch gekennzeichnet, dass** die charakteristischen Abmessungen der Pixelabschnitte (4, 5) der Teilbereiche zwischen 2 µm und 300 µm, bevorzugt zwischen 3 µm und 50 µm und besonders bevorzugt zwischen 4 µm und 20 µm liegen.

8. Optisch variables Flächenmuster nach einem der obigen Ansprüche, **dadurch gekennzeichnet, dass** in den Pixelabschnitten (4, 5) jeweils eine oder mehrere reflektive und/oder refraktive Facetten mit den Abmessungen zwischen 3 µm und 50 µm und besonders bevorzugt zwischen 4 µm und 20 µm vorliegen.

9. Optisch variables Flächenmuster nach Anspruch 1, **dadurch gekennzeichnet, dass** durch Überlagerung der Facetten mit sub-Wellenlängenstrukturen eine farbige Darstellung entsteht, insbesondere dass durch unterschiedliche sub-Wellenlängenstrukturen eine oder mehrere Darstellungen mit mehreren Farben realisiert sind.

10. Verwendung des optisch variablen Flächenmusters nach einem der obigen Ansprüche als Sicherheitselement, insbesondere als Sicherheitselement für ein Sicherheitspapier, Wertdokument oder dergleichen.

11. Wertdokument mit einem optisch variablen Flächenmuster nach einem der Ansprüche 1 bis 9.

## Claims

1. Optically variable surface pattern divided into at least one first partial region (8) having a plurality of first pixel sections (4) and one second partial region (9) having a plurality of second pixel sections (5),
wherein the two partial regions (8, 9) offer two different views of the same motif depending on the viewing angle so that a three-dimensional image impression is produced for a viewer,
wherein the surface pattern (3) is embodied as a reflective and/or refractive surface pattern and is divided into a plurality of overpixels (12) in which in each case at least one of the pixel sections (4, 5) is contained,
wherein in each case a screened halftone representation of the corresponding view is realized by means of the pixel sections (4, 5) of the two partial regions (8, 9),
wherein the pixel sections (4, 5) for the halftone representation represent only bright and dark pixels produced with a halftone screening method,
and wherein in each case one reflective and/or refractive facet or a plurality of reflective and/or refractive facets that form a sawtooth grid and have dimensions of between 2 µm and 300 µm are present in the pixel sections (4, 5).

2. Optically variable surface pattern according to Claim 1, **characterized in that** the pixel sections are imprinted.

3. Optically variable surface pattern according to Claim 2, **characterized in that** the imprinted pixel sections are at least regionally provided with a reflection-increasing coating, or **in that** the imprinted pixel sections are at least regionally coated with a coloured or colour-shifting coating, in particular a printed ink and/or a thin-film system with absorber/ dielectric/ reflector.

4. Optically variable surface pattern according to one of the preceding claims, **characterized in that** the angular distance in the horizontal and/or vertical direction of the views offered by the two partial regions lies in the range from 1° to 10° and in particular in the range from 3° to 5°.

5. Optically variable surface pattern according to one of the preceding claims, **characterized in that** the number of the pixel sections (4, 5) per overpixel (12) is the same as the number of the partial regions.

6. Optically variable surface pattern according to one of Claims 1 to 4, **characterized in that** the number of the pixel sections (4-7) per overpixel (12) is smaller than the number of the partial regions (8-11).

7. Optically variable surface pattern according to one of the preceding claims, **characterized in that** the characteristic dimensions of the pixel sections (4, 5) of the partial regions lie between 2 µm and 300 µm, preferably between 3 µm and 50 µm and with particular preference between 4 µm and 20 µm.

8. Optically variable surface pattern according to one of the preceding claims, **characterized in that** in each case one or more reflective and/or refractive facets having dimensions of between 3 µm and 50 µm and with particular preference between 4 µm and 20 µm are present in the pixel sections (4,5).

9. Optically variable surface pattern according to Claim 1, **characterized in that** a coloured representation is obtained by overlaying the facets with sub-wavelength structures, in particular **in that** one or more representations with a plurality of colours are implemented by way of different sub-wavelength structures.

10. Use of the optically variable surface pattern according to one of the preceding claims as a security element, in particular as a security element for a security paper, valuable document or the like.

11. Valuable document having an optically variable surface pattern according to one of Claims 1 to 9.

## Revendications

1. Motif de surface variable visuellement, qui est divisé en au moins une première zone partielle (8) comprenant plusieurs premières portions de pixels (4) et une deuxième zone partielle (9) comprenant plusieurs deuxièmes portions de pixels (5),
les deux zones partielles (8, 9) offrant deux vues différentes du même motif, dépendantes de l'angle d'observation, de sorte qu'un observateur a une impression d'image tridimensionnelle,
le motif de surface (3) étant réalisé sous la forme d'un motif de surface réflectif et/ou réfractif et étant subdivisé en une pluralité de surpixels (12) dans lesquels est respectivement contenue au moins l'une des portions de pixels (4, 5),
une représentation en demi-ton tramée de la vue correspondante étant respectivement produite au moyen des portions de pixels (4, 5) des deux zones partielles (8, 9),
les portions de pixels (4, 5), en vue de la représentation en demi-ton, ne représentant que des pixels clairs et sombres qui sont générés avec un procédé de trame de demi-ton,
et une facette réflective et/ ou réfractive ou plusieurs facettes réflectives et/ou réfractives étant respectivement présentes dans les portions de pixels (4, 5), lesquelles forment une grille en dents de scie avec des dimensions entre 2 µm et 300 µm.

2. Motif de surface variable visuellement selon la revendication 1, **caractérisé en ce que** les portions de pixels sont gaufrées.

3. Motif de surface variable visuellement selon la revendication 2, **caractérisé en ce que** les portions de pixels gaufrées sont pourvues au moins dans certaines zones d'un revêtement de rehaussement de la réflexion, ou **en ce que** les portions de pixels gaufrées sont revêtues au moins dans certaines zones d'un revêtement coloré ou à basculement de couleur, notamment d'une couleur imprimée et/ou d'un système à film mince comprenant un absorbeur/ diélectrique/ réflecteur.

4. Motif de surface variable visuellement selon l'une des revendications précédentes, **caractérisé en ce que** l'écart angulaire dans la direction horizontale et/ou verticale des vues offertes par les deux zones partielles est compris dans la plage de 1° à 10° et notamment dans la plage de 3° à 5°.

5. Motif de surface variable visuellement selon l'une des revendications précédentes, **caractérisé en ce que** le nombre de portions de pixels (4, 5) par surpixel (12) est égal au nombre de zones partielles.

6. Motif de surface variable visuellement selon l'une des revendications 1 à 4, **caractérisé en ce que** le nombre de portions de pixels (4-7) par surpixel (12) est inférieur au nombre de zones partielles (8-11).

7. Motif de surface variable visuellement selon l'une des revendications précédentes, **caractérisé en ce que** les dimensions caractéristiques des portions de pixels (4, 5) des zones partielles sont comprises entre 2 µm et 300 µm, de préférence entre 3 µm et 50 µm et notamment de préférence entre 4 µm et 20 µm.

8. Motif de surface variable visuellement selon l'une des revendications précédentes, **caractérisé en ce qu'**une ou plusieurs facettes réflectives et/ou réfractives ayant des dimensions entre 3 µm et 50 µm et notamment de préférence entre 4 µm et 20 µm sont présentes dans les portions de pixels (4, 5).

9. Motif de surface variable visuellement selon la revendication 1, **caractérisé en ce qu'**une représentation en couleur est produite en superposant les facettes avec des structures à sublongueur d'onde, notamment **en ce qu'**une ou plusieurs représentations avec plusieurs couleurs sont réalisées par des structures à sublongueur d'onde différentes.

10. Utilisation du motif de surface variable visuellement selon l'une des revendications précédentes en tant qu'élément de sécurité, notamment en tant qu'élément de sécurité pour un papier de sécurité, un document de valeur ou similaire.

11. Document de valeur comprenant un motif de surface variable visuellement selon l'une des revendications 1 à 9.
